# EUROPEAN PATENT APPLICATION

(11) **EP 4 129 943 A1**
(43) Date of publication of application: **08.02.2023**
(21) Application number: 21774011.7
(22) Date of filing: 23.03.2021
(51) Int. Cl.: C03C 27/12, B32B 17/10, B60J 1/00, B60J 1/02

(54) **WINDSHIELD**

(30) Priority: 23.03.2020 JP 2020051932; 23.03.2020 JP 2020051933; 23.03.2020 JP 2020051934
(71) Applicant: NIPPON SHEET GLASS COMPANY, LIMITED, Tokyo 108-6321 (JP)
(72) Inventor: KANKI, Satoshi, Tokyo 108-6321 (JP); HOTTA, Hirofumi, Tokyo 108-6321 (JP)
(74) Representative: Mewburn Ellis LLP
(86) International application number: PCT/JP2021/012023
(87) International publication number: WO 2021/193647

(57) **Abstract**

The present invention is directed to a windshield including a first glass plate that includes a first surface and a second surface, a second glass plate that includes a first surface and a second surface and is arranged such that the first surface of the second glass plate faces the second surface of the first glass plate; and an intermediate film that includes a first surface and a second surface and is sandwiched between the first glass plate and the second glass plate. The first glass plate and the second glass plate each include a first end portion and a second end portion that is opposite to the first end portion. The intermediate film includes a first end portion and a second end portion that is opposite to the first end portion. The first glass plate has a thickness that decreases from the first end portion toward the second end portion and has a wedge-shaped cross section. A plurality of lines are formed on both the first glass plate and the second glass plate, the lines extending in a horizontal direction when the first glass plate and the second glass plate are attached to a vehicle.

## Description

### Technical Field

The present invention relates to a windshield.

### Background Art

Windshields that are used with head-up display devices are commonly formed into a wedge shape in order to prevent a double image from occurring. Although there are various methods for forming a windshield into a wedge shape, for example, Patent Literature 1 discloses a windshield that includes an intermediate film and an inner glass plate that have constant thicknesses and an outer glass plate that is formed into a wedge shape.

### Citation List

### Patent Literature

Patent Literature 1: JP 2017-105665A

### Summary of Invention

### Technical Problem

However, when a windshield is produced using such a wedge-shaped glass plate, a visibility problem may arise. A first windshield of the present invention was made to solve this problem, and it is an object thereof to provide a windshield capable of suppressing impairment of visibility despite the use of a wedge-shaped glass plate.

### Solution to Problem

The first windshield of the present invention is configured as follows.

Aspect 1. A windshield including:
a first glass plate that includes a first surface and a second surface;
a second glass plate that includes a first surface and a second surface and is arranged such that the first surface of the second glass plate faces the second surface of the first glass plate; and
an intermediate film that includes a first surface and a second surface and is sandwiched between the first glass plate and the second glass plate,
wherein
the first glass plate and the second glass plate each include a first end portion and a second end portion that is opposite to the first end portion,
the intermediate film includes a first end portion and a second end portion that is opposite to the first end portion,
the first glass plate has a thickness that decreases from the first end portion toward the second end portion and has a wedge-shaped cross section, and
a plurality of lines are formed on both the first glass plate and the second glass plate, the lines extending in a horizontal direction when the first glass plate and the second glass plate are attached to a vehicle.

Aspect 2. The windshield according to aspect 1, wherein at least one of positions of the plurality of lines formed on the first glass plate substantially overlaps any of positions of the plurality of lines formed on the second glass plate.

Aspect 3. The windshield according to aspect 1 or 2, wherein a pitch between the plurality of lines formed on the first glass plate is substantially the same as a pitch between the plurality of lines formed on the second glass plate.

Aspect 4. The windshield according to any one of aspects 1 to 3,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that surfaces containing the tin oxide at a lower concentration face each other.

Aspect 5. The windshield according to any one of aspects 1 to 3,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that a surface containing the tin oxide at a lower concentration and a surface containing the tin oxide at a higher concentration face each other.

Aspect 6. The windshield according to any one of aspects 1 to 5,
wherein the second glass plate has a thickness that decreases from the first end portion toward the second end portion and has a wedge-shaped cross section, and
a wedge angle of the first glass plate and a wedge angle of the second glass plate are substantially the same.

Aspect 7. The windshield according to any one of aspects 1 to 5,
wherein the second glass plate has a thickness that decreases from the first end portion toward the second end portion and has a wedge-shaped cross section, and
a wedge angle of the first glass plate and a wedge angle of the second glass plate differ from each other.

Aspect 8. The windshield according to any one of aspects 1 to 7, wherein the intermediate film has a thickness that decreases from the first end portion toward the second end portion and has a wedge-shaped cross section.

Aspect 9. The windshield according to any one of aspects 1 to 7, wherein the intermediate film has a thickness that decreases from the second end portion toward the first end portion and has a wedge-shaped cross section.

Aspect 10. The windshield according to aspect 8 or 9,
wherein a wedge angle of the first glass plate is 0.1 to 0.7 mrad, and
a wedge angle of the intermediate film is 0.02 to 0.18 mrad.

Aspect 11. The windshield according to aspect 8 or 9,
wherein a wedge angle of the first glass plate is 0.15 to 0.45 mrad, and
a wedge angle of the intermediate film is 0.05 to 0.15 mrad.

Aspect 12. The windshield according to aspect 1,
wherein the first surface and the second surface of the first glass plate form a wedge angle α1,
a thickness of the intermediate film decreases from the first end portion toward the second end portion and the first surface and the second surface of the intermediate film form a wedge angle α3, and
the wedge angle α1 is larger than the wedge angle α3.

Aspect 13. The windshield according to aspect 12, wherein the first surface and the second surface of the second glass plate form a wedge angle α2.

Aspect 14. The windshield according to aspect 12 or 13, wherein the first end portion of the first glass plate and the second end portion of the intermediate film are arranged on the same side.

Aspect 15. The windshield according to aspect 12 or 13, wherein the first end portion of the first glass plate and the first end portion of the intermediate film are arranged on the same side.

Aspect 16. The windshield according to aspect 1, wherein at least one of the second glass plate and the intermediate film has a thickness that decreases from the first end portion toward the second end portion and has a wedge-shaped cross section.

Aspect 17. The windshield according to aspect 16,
wherein the intermediate film has a wedge-shaped cross section, and
the first end portion of the intermediate film and the first end portion of the first glass plate are located on the same side.

Aspect 18. The windshield according to aspect 16 or 17,
wherein the second glass plate has a wedge-shaped cross section, and
the wedge angle of the first glass plate is larger than the wedge angle of the second glass plate.

Aspect 19. The windshield according to aspect 18, wherein a difference between the wedge angle of the first glass plate and the wedge angle of the second glass plate is 0.35 to 0.45 mrad.

Aspect 20. The windshield according to aspect 18, wherein a difference between the wedge angle of the first glass plate and the wedge angle of the second glass plate is 0.75 to 0.85 mrad.

Aspect 21. The windshield according to any one of aspects 16 to 20,
wherein the intermediate film has a wedge-shaped cross section,
the wedge angle of the first glass plate is (0.2+0.4n)±0.05 mrad (where n is an integer that is greater than or equal to 0), and
a wedge angle of the intermediate film is 0.05 to 0.15 rad.

Aspect 22. The windshield according to any one of aspects 1 to 11, wherein a thickness decreases from an upper side toward a lower side.

In Patent Literature 1 above, the wedge angle of the entire windshield is adjusted by adjusting the wedge angles of the outer glass plate and the inner glass plate. However, for example, a windshield with a wedge angle smaller than the wedge angles of the glass plates cannot be formed. There is a possibility that a wide variety of wedge angles are required, but conventionally, there is no way to adjust the wedge angle of a windshield other than adjusting the wedge angle of a glass plate. Second and third windshields according to the present invention were made to solve this problem, and it is an object thereof to provide a windshield in which the wedge angle can be set to any angle.

The second windshield of the present invention is configured as follows.

Aspect 1. A windshield including:
a first glass plate that includes a first surface and a second surface;
a second glass plate that includes a first surface and a second surface and is arranged such that the first surface of the second glass plate faces the second surface of the first glass plate; and
an intermediate film that includes a first surface and a second surface and is sandwiched between the first glass plate and the second glass plate,
wherein
the first glass plate and the second glass plate each include a first end portion and a second end portion that is opposite to the first end portion,
at least one of the first glass plate and the second glass plate has a thickness that decreases from the first end portion toward the second end portion, and the first surface and the second surface form a wedge angle α1,
the intermediate film includes a first end portion and a second end portion that is opposite to the first end portion,
a thickness of the intermediate film decreases from the first end portion toward the second end portion and the first surface and the second surface of the intermediate film form a wedge angle α3, and
the wedge angle α1 is larger than the wedge angle α3.

Aspect 2. The windshield according to aspect 1, wherein the first end portion of the glass plate with a wedge angle α1 out of the first glass plate and the second glass plate and the second end portion of the intermediate film are located on the same side.

Aspect 3. The windshield according to aspect 1, wherein the first end portion of the glass plate with a wedge angle α1 out of the first glass plate and the second glass plate and the first end portion of the intermediate film are located on the same side.

Aspect 4. The windshield according to any one of aspects 1 to 3,
wherein the wedge angle α1 is 0.1 to 0.7 mrad, and
the wedge angle α3 is 0.02 to 0.18 mrad.

Aspect 5. The windshield according to any one of aspects 1 to 3,
wherein the wedge angle α1 is 0.15 to 0.45 mrad, and
the wedge angle α3 is 0.05 to 0.15 mrad.

Aspect 6. The windshield according to any one of aspects 1 to 5,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that surfaces containing the tin oxide at a higher concentration face each other or surfaces containing the tin oxide at a lower concentration face each other.

Aspect 7. The windshield according to aspect 6, wherein the first glass plate and the second glass plate are arranged such that surfaces containing the tin oxide at a higher concentration face each other.

Aspect 8. The windshield according to aspect 6,
wherein the first glass plate and the second glass plate are arranged such that surfaces containing the tin oxide at a lower concentration face each other, and
at least one of a shield layer and an antenna is layered on the second surface of the second glass plate.

Aspect 9. The windshield according to any one of aspects 1 to 8,
wherein lines are formed on the first glass plate, and
lines that are substantially orthogonal to the lines on the first glass plate are formed on the second glass plate.

Aspect 10. The windshield according to any one of aspects 1 to 8,
wherein lines are formed on the first glass plate, and
lines that are substantially parallel to the lines on the first glass plate are formed on the second glass plate.

Aspect 11. The windshield according to any one of aspects 1 to 10, wherein a thickness decreases from an upper side toward a lower side.

The third windshield of the present invention is configured as follows.

Aspect 1. A windshield including:
a first glass plate that includes a first surface and a second surface;
a second glass plate that includes a first surface and a second surface and is arranged such that the first surface of the second glass plate faces the second surface of the first glass plate; and
an intermediate film that includes a first surface and a second surface and is sandwiched between the first glass plate and the second glass plate,
wherein
the first glass plate and the second glass plate each include a first end portion and a second end portion that is opposite to the first end portion,
the intermediate film includes a first end portion and a second end portion that is opposite to the first end portion,
the first glass plate has a thickness that decreases from the first end portion toward the second end portion and has a wedge-shaped cross section, and
at least one of the second glass plate and the intermediate film has a thickness that decreases from the first end portion toward the second end portion and has a wedge-shaped cross section.

Aspect 2. The windshield according to aspect 1,
wherein the intermediate film has a wedge-shaped cross section, and
the first end portion of the intermediate film and the first end portion of the first glass plate are located on the same side.

Aspect 3. The windshield according to aspect 1 or 2,
wherein the second glass plate has a wedge-shaped cross section, and
a wedge angle of the first glass plate is larger than a wedge angle of the second glass plate.

Aspect 4. The windshield according to aspect 3, wherein a difference between the wedge angle of the first glass plate and the wedge angle of the second glass plate is 0.35 to 0.45 mrad.

Aspect 5. The windshield according to aspect 3, wherein a difference between the wedge angle of the first glass plate and the wedge angle of the second glass plate is 0.75 to 0.85 mrad.

Aspect 6. The windshield according to any one of aspects 1 to 5,
wherein the intermediate film has a wedge-shaped cross section, and
the wedge angle of the first glass plate is (0.2+0.4n)±0.05 mrad (where n is an integer that is greater than or equal to 0), and
a wedge angle of the intermediate film is 0.05 to 0.15 rad.

Aspect 7. The windshield according to any one of aspects 1 to 6,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that surfaces containing the tin oxide at a higher concentration face each other or surfaces containing the tin oxide at a lower concentration face each other.

Aspect 8. The windshield according to aspect 7, wherein the first glass plate and the second glass plate are arranged such that surfaces containing the tin oxide at a higher concentration face each other.

Aspect 9. The windshield according to aspect 7,
wherein the first glass plate and the second glass plate are arranged such that surfaces containing the tin oxide at a lower concentration face each other, and
at least one of a shield layer and an antenna is layered on the second surface of the second glass plate.

Aspect 10. The windshield according to any one of aspects 1 to 9,
wherein lines are formed on the first glass plate, and
lines that are substantially orthogonal to the lines on the first glass plate are formed on the second glass plate.

Aspect 11. The windshield according to any one of aspects 1 to 9,
wherein lines are formed on the first glass plate, and
lines that are substantially parallel to the lines on the first glass plate are formed on the second glass plate.

Aspect 12. The windshield according to any one of aspects 1 to 11, wherein a thickness decreases from an upper side toward a lower side.

### Advantageous Effects of the Invention

With the windshield according to the present invention, it is possible to suppress impairment of visibility despite the use of a wedge-shaped glass plate.

### Brief Description of Drawings

FIG. 1 is a front view showing a first embodiment of a windshield according to the present invention.
FIG. 2 is a cross-sectional view taken along line A-A in FIG. 1.
FIG. 3 is a diagram for illustrating an example of a method for manufacturing a float glass plate.
FIG. 4 is a cross-sectional view illustrating a method for cutting out a glass plate.
FIG. 5 is a cross-sectional view of a float glass plate.
FIG. 6A is a cross-sectional view of the windshield shown in FIG. 1.
FIG. 6B is a cross-sectional view showing another example of FIG. 6A.
FIG. 7 is a front view illustrating lines on the windshield shown in FIG. 1.
FIG. 8 is a cross-sectional view showing intermediate film drawing processing.
FIG. 9 is a plan view showing the intermediate film drawing processing.
FIG. 10 is a schematic view of a molding line for a glass plate.
FIG. 11A is a plan view of a furnace through which a mold shown in FIG. 10 passes.
FIG. 11B is a plan view showing another example of FIG. 11A.
FIG. 12 is a schematic view of a head-up display device.
FIG. 13 shows cross-sectional views showing windshields that differ in the wedge angle.
FIG. 14 is a cross-sectional view of a windshield according to a second embodiment.
FIG. 15 is a front view illustrating lines on the windshield shown in FIG. 14.
FIG. 16 is a plan view of a mold for a glass plate.
FIG. 17 is a side view of a furnace through which the mold shown in FIG. 16 passes.
FIG. 18 shows cross-sectional views showing windshields of a third embodiment that differ in the wedge angle.

### Description of Embodiments

### A. First Embodiment

### 1. Overview of Windshield

Hereinafter, a first embodiment of a windshield for an automobile according to the present invention will be described with reference to the drawings. The windshield according to this embodiment is used for displaying information by projecting light emitted from a head-up display device.

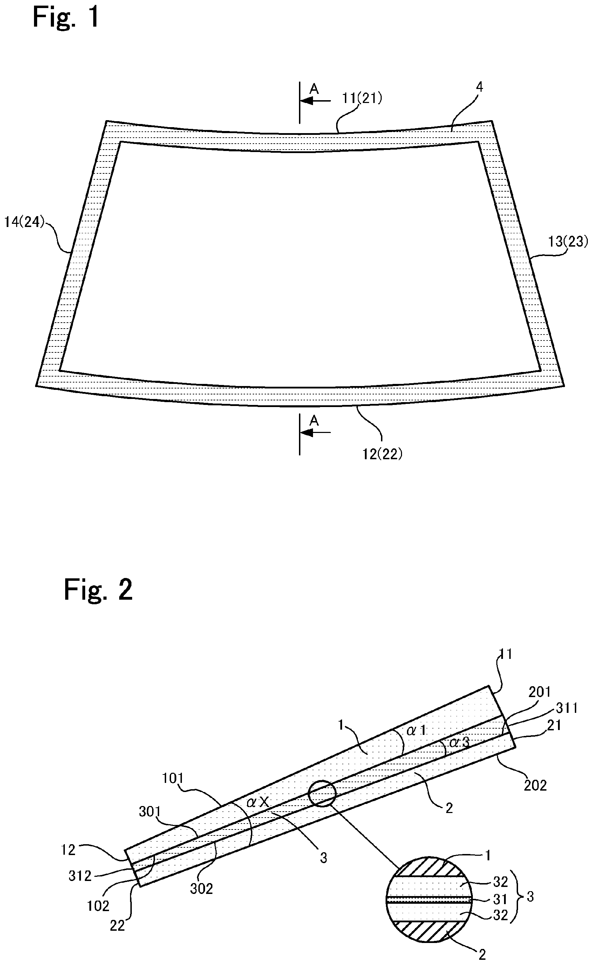

FIG. 1 is a front view of the windshield according to this embodiment, and FIG. 2 is a cross-sectional view taken along line A-A in FIG. 1. As shown in FIGS. 1 and 2, the windshield according to this embodiment includes an outer glass plate (first glass plate) 1 and an inner glass plate 2 (second glass plate) that respectively face the vehicle exterior side and the vehicle interior side when the windshield is attached to an automobile, and an intermediate film 3 disposed between the glass plates 1 and 2. The cross section of the entire windshield has a wedge shape (wedge angle αX). Moreover, a shield layer 4 is layered on this windshield. Note that, in the diagrams illustrating this embodiment, the wedge angle is shown in an exaggerated manner for convenience in the description. The following describes the respective members.

### 2. Outer Glass Plate and Inner Glass Plate

First, the outer glass plate 1 and the inner glass plate 2 will be described. Known glass plates can be used as the outer glass plate 1 and the inner glass plate 2, and these glass plates can also be made of heat-ray absorbing glass, regular clear glass, green glass, or UV green glass. However, the glass plates 1 and 2 need to realize visible light transmittance that conforms to the safety standards of the country in which the automobile is to be used. For example, adjustments can be made so that the outer glass plate 1 ensures a required solar absorptance and the inner glass plate 2 provides visible light transmittance that meets safety standards. The following shows examples of clear glass, heat-ray absorbing glass, and soda lime-based glass.

### Clear Glass

SiOs: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) in terms of Fe₂O₃: 0.08 to 0.14 mass%

### Heat-Ray Absorbing Glass

With regard to the composition of heat-ray absorbing glass, a composition obtained, which is based on the composition of clear glass, by setting the ratio of the total iron oxide (T-Fe₂O₃) in terms of Fe₂O₃ to 0.4 to 1.3 mass%, the ratio of CeOs to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

### Soda Lime-Based Glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO + CaO: 5 to 15 mass%
Na₂O + K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

The outer glass plate 1 is formed into a trapezoidal shape and includes an upper side (short side) 11, a lower side (long side) 12 that is longer than the upper side 11, a right side 13, and a left side 14. When the outer glass plate 1 is attached to an automobile, the upper side 11 is located at the upper position, and the right side 13 and the left side 14 are located at the right position and the left position, respectively, as viewed from the vehicle interior side. Also, the outer glass plate includes a first surface 101 that faces the vehicle exterior side, a second surface 102 that faces the vehicle interior side, and an edge surface that connects the first surface and the second surface. The outer glass plate 1 is formed into a wedge shape where the thickness decreases from the upper side 11 toward the lower side 12. Although there is no particular limitation on the wedge angle α1 between the first surface 101 and the second surface 102 in the wedge shape, the wedge angle α1 can be set to, for example, 0.1 to 0.7 mrad, or 0.15 to 0.45 mrad.

Similarly, the inner glass plate 2 is also formed into a trapezoidal shape, and includes an upper side 21, a lower side 22, a right side 23, and a left side 24. The inner glass plate also includes a first surface 201 that faces the vehicle exterior side, a second surface 202 that faces the vehicle interior side, and an edge surface that connects the first surface 201 and the second surface 202. In the example shown in FIG. 2, unlike the outer glass plate 1, the inner glass plate 2 is constituted by a flat plate that has a constant thickness. However, the inner glass plate 2 can also be formed into a wedge shape (in this case, it has a wedge angle α2) similarly to the outer glass plate 1. In this case, the wedge angle of the inner glass plate 2 can be the same as that of the outer glass plate 1. Note that, when the inner glass plate 2 is formed into a wedge shape, the wedge angle of the outer glass plate 1 can be made larger than the wedge angle of the inner glass plate 2, for example. In this case, a difference between the wedge angle of the outer glass plate 1 and the wedge angle of the inner glass plate 2 can be set to, for example, 0.35 to 0.45 mrad, or 0.75 to 0.85 mrad.

The above-described intermediate film 3 is arranged between the second surface 102 of the outer glass plate 1 and the first surface 201 of the inner glass plate 2.

Although there is no particular limitation on the thickness of the windshield according to this embodiment, the total thickness of the outer glass plate 1 and the inner glass plate 2 is preferably set to 2.4 to 5.0 mm, more preferably 2.6 to 4.6 mm, and particularly preferably 2.7 to 3.2 mm, from the viewpoint of weight reduction. As described above, it is necessary to reduce the total thickness of the outer glass plate 1 and the inner glass plate 2 in order to reduce the weight, and therefore, although there is no particular limitation on the thicknesses of the outer glass plate 1 and the inner glass plate 2, the thicknesses of these glass plates 1 and 2 can be determined as described below, for example. Note that, when the glass plates 1 and 2 have a wedge-shaped cross-sectional shape, the thicknesses of the thinnest portions of the glass plates 1 and 2 are taken as the thicknesses thereof, and these thicknesses can be measured using a micrometer.

Durability against external damage and impact resistance are mainly required for the outer glass plate 1, and impact resistance against flying objects such as small stones is required. On the other hand, the weight increases as the thickness increases, which is not preferable. From this viewpoint, the thickness of the outer glass plate 1 is preferably 1.8 to 2.3 mm, and more preferably 1.9 to 2.1 mm. It is possible to determine the thickness to employ according to the use of the glass. However, the thickness decreases from the upper side 11 toward the lower side 12, and accordingly, the thickness of the upper side 11 can be set to 2.5 to 5.0 mm, the thickness of the lower side 12 can be set to 2.6 to 6.7 mm, and a difference in thickness between the upper side 11 and the lower side 12 can be set to 0.1 to 1.7 mm, for example.

The thickness of the inner glass plate 2 can be made equal to that of the outer glass plate 1, but in order to reduce the weight of the windshield, for example, the thickness of the inner glass plate 2 can be made smaller than that of the outer glass plate 1. Specifically, when the strength of the glass is taken into consideration, the thickness is preferably 0.1 to 2.3 mm, more preferably 0.8 to 2.0 mm, and particularly preferably 1.0 to 1.4 mm. The thickness is yet more preferably 0.8 to 1.3 mm. For the inner glass plate 2 as well, it is possible to determine the thickness to employ according to the use of the glass.

The outer glass plate 1 and the inner glass plate 2 according to this embodiment have a curved shape. It is supposed that, if the windshield has a curved shape, the larger the depth of bend is, the lower the sound insulation performance is. The depth of bend is an amount indicating the bend of the windshield, and when a straight line connecting the center of the upper side and the center of the lower side of the windshield is set, for example, the greatest distance between this straight line and the windshield is defined as the depth of bend.

Here, an example of a method for measuring the thickness of the windshield will be described. First, with respect to the measurement position, the measurement is performed at two positions: an upper position and a lower position on a center line extending in the up-down direction at the center of the windshield in the left-right direction. Although there is no particular limitation on the measurement device, a thickness gauge such as SM-112 manufactured by TECLOCK Co., Ltd. can be used, for example. During measurement, the windshield is arranged such that its curved surface is placed on a flat surface, and an end portion of the windshield is sandwiched and measured with the above-described thickness gauge.

### 3. Method for Manufacturing Outer Glass Plate and Inner Glass Plate

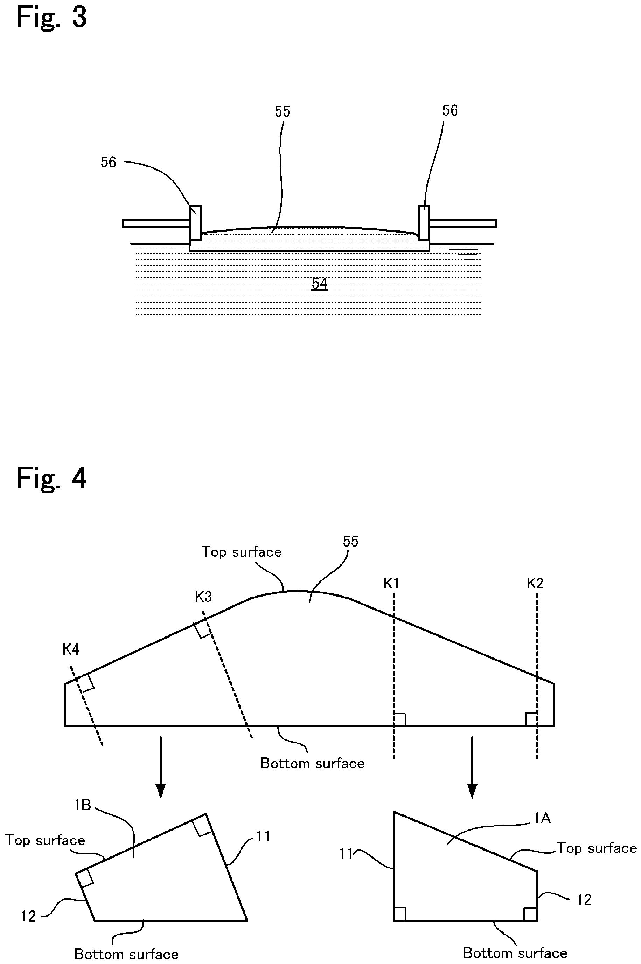

Next, an example of a method for manufacturing the outer glass plate 1 and the inner glass plate 2 will be described with reference to FIG. 3. In an example, float glass plates manufactured using a float method can be used as the outer glass plate 1 and the inner glass plate 2.

FIG. 3 is a diagram showing a method for manufacturing a float glass plate. The direction perpendicular to the sheet face of FIG. 3 is a flow direction of molten glass 55 and the left-right direction is the width direction of the molten glass 55. In FIG. 3, a variation in the thickness of the molten glass 55 is shown in an exaggerated manner.

In the float method, molten glass 55 is continuously supplied onto molten metal 54 such as molten tin and the supplied molten glass 55 is caused to flow on the molten metal 54 to form the molten glass 55 into a band plate shape. The thus formed glass is called a glass ribbon 55.

In order to suppress contraction of the glass ribbon 55 in the width direction, both end portions of the glass ribbon 55 in the width direction are pressed by a pair of rollers 56. A plurality of pairs of rollers 56 are provided at intervals therebetween in the flow direction of the glass ribbon 55. As a result of the plurality of pairs of rollers 16 rotating, the glass ribbon 55 moves downstream.

The glass ribbon 55 is cooled as it moves downstream, and is lifted up from the molten metal 54 after it is cooled and solidified. The glass ribbon 55 is annealed and then cut. Thus, a float glass plate is obtained. Here, a surface of the float glass plate that has been in contact with the molten metal 54 will be referred to as a bottom surface and a surface that is opposite to the bottom surface will be referred to as a top surface. The bottom surface and the top surface may be unpolished. Note that the bottom surface has been in contact with the molten metal 54, and accordingly, if the molten metal 54 is tin, a concentration of tin oxide contained in the bottom surface is larger than a concentration of tin oxide contained in the top surface.

In FIG. 3, the thickness of the glass ribbon 55 increases from both end portions in the width direction toward a center portion, as a result of the glass ribbon 55 being pulled in the width direction by the pair of rollers 56. As a result of the thus formed glass ribbon 55 being solidified and then cut, the outer glass plate 1 is obtained. At this time, there are two methods for cutting out the outer glass plate, as shown in FIG. 4. In one method, the glass ribbon 55 is cut such that cut surfaces K1 and K2 extend in the vertical direction as shown on the right side in FIG. 4. These cut surfaces K1 and K2 extend parallel to each other and in the thus obtained outer glass plate 1A, the cut surfaces K1 and K2 are orthogonal to the bottom surface. In the other method, the glass ribbon 55 is cut such that cut surfaces K3 and K4 that are perpendicular to the top surface are formed as shown on the left side in FIG. 4. These cut surfaces K3 and K4 extend parallel to each other, and in the thus obtained outer glass plate 1B, the cut surfaces K3 and K4 are orthogonal to the top surface. Regardless of which method is employed, the outer glass plate 1 whose thickness decreases from the upper side 11 toward the lower side 12 is cut out.

On the other hand, although the inner glass plate 2 is formed using the float method similarly to the outer glass plate 1, the inner glass plate 2 is formed using a known method in which the above-described roller is not used. Accordingly, the thickness of the inner glass plate 2 is made substantially constant. However, when the inner gas plate 2 is formed into a wedge shape, it can be formed in the same manner as the outer glass plate 1.

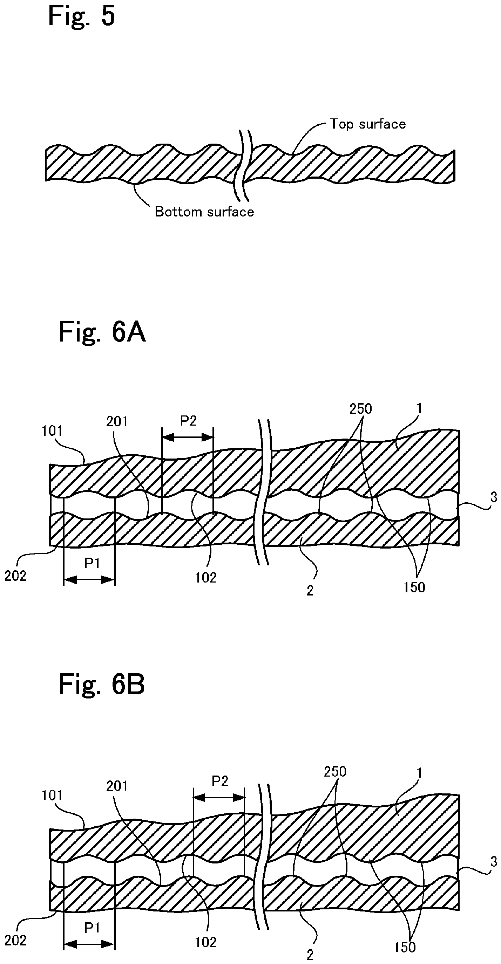

Since the glass ribbon 55 flows on the molten metal 54, a plurality of lines that extend in the flow direction are formed on a surface of the glass ribbon 55. These lines are also formed on a surface of the cooled float glass plate. As shown in FIG. 5, wave-shaped irregularities are formed with the lines on a surface of the inner glass plate 2 in a direction orthogonal to the lines. Note that, similarly to FIG. 3, FIG. 5 shows a cross section that is orthogonal to the flow direction of the glass plate. Similar irregularities are also formed on the outer glass plate 1. However, in each of the glass plates 1 and 2, irregularities of the bottom surface that has been in contact with the molten metal 54 are smaller than irregularities of the top surface. Here, irregularities being small means that a difference between the deepest portion and the highest portion of the irregularities is small. Also, in addition to the above-described irregularities formed with the lines, waves that extend in a direction orthogonal to the irregularities are also formed on the surface of the glass plate formed using the float method. The pitch between these waves is larger than the pitch between the lines, and the waves are larger than the irregularities formed by the lines.

As shown in FIG. 6, in the windshield according to this embodiment, the second surface 102 of the outer glass plate 1 and the first surface 201 of the inner glass plate 2 are constituted by top surfaces. In this configuration, the first surface 101 of the outer glass plate 1 and the second surface 202 of the inner glass plate 2, i.e., both surfaces of the windshield that face the outside, have small irregularities.

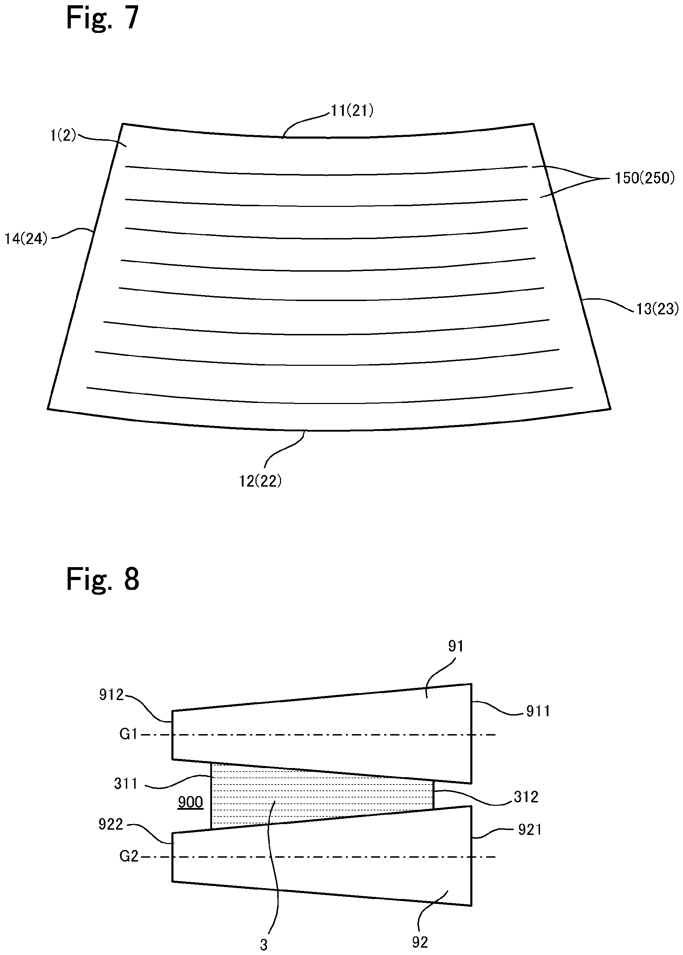

In this embodiment, lines 150 on the outer glass plate 1 extend parallel to lines 250 on the inner glass plate 2 as shown in FIGS. 6 and 7. That is to say, the lines 150 on the outer glass plate 1 formed using the above-described method extend parallel to the upper side 11 and the lower side 12. On the other hand, since the inner glass plate 2 has a constant thickness, the direction of the lines 250 can be adjusted. However, similarly to the outer glass plate 1, the inner glass plate 2 is cut out from the glass ribbon such that the lines 250 extend parallel to the upper side 21 and the lower side 22. Thus, the windshield is formed such that the lines 150 on the outer glass plate 1 extend parallel to the lines 250 on the inner glass plate 2. When the thus formed windshield is attached to a vehicle, both the lines 150 on the outer glass plate 1 and the lines 250 on the inner glass plate 2 extend in the horizontal direction.

In this embodiment, the positions of the lines 150 on the outer glass plate 1 and the positions of the lines 250 on the inner glass plate 2 substantially overlap and are opposed to each other. The positions of the lines refer to the positions of the deepest portions of the depressions or the positions of the highest portions of the protrusions. The pitch between the protrusions of the lines and the pitch between the depressions of the lines are substantially the same. Therefore, "the lines overlap" means that, as shown in FIG. 6A, the highest portions of the protrusions on the outer glass plate 1 and the highest portions of the protrusions on the inner glass plate 2 overlap while the deepest portions of the depressions on the outer glass plate 1 and the deepest portions of the depressions on the inner glass plate 2 overlap, or, as shown in FIG. 6B, the highest portions of the protrusions on the outer glass plate 1 and the deepest portions of the depressions on the inner glass plate 2 overlap while the deepest portions of the depressions on the outer glass plate 1 and the highest portions of the protrusions on the inner glass plate 2 overlap. Note that, in FIGS. 6A and 6B, only the highest portions 150 of the protrusions on the outer glass plate 1 and the highest portions 250 of the protrusions on the inner glass plate 2 are shown as the lines for convenience in the description. A pitch P1 between the lines 150 on the outer glass plate 1 and a pitch P2 between the lines 250 on the inner glass plate 2 are substantially the same. The pitch P1 and the pitch P2 refer to the interval between the lines 150 and the interval between the lines 250 in the up-down direction, respectively.

In the manufacturing of the outer glass plate 1, the thickness can be increased from both end portions in the width direction toward the center portion or from one end portion toward the other end portion in the width direction, by adjusting forming conditions. The thickness of such a glass ribbon 55 can be adjusted by adjusting the pulling force applied by the rollers 56, the peripheral speed of the rollers 56, and the like.

After the outer glass plate 1 and the inner glass plate 2 have been cut out as described above, the edge surfaces at the four sides of the glass plates 1 and 2 are polished using a known method such that the cross section has an arc shape that protrudes outward.

### 4. Intermediate Film

Similarly to the glass plates 1 and 2, the intermediate film 3 is formed into a trapezoidal shape. Also, as shown in FIG. 2, the intermediate film 3 includes a first surface 301 that faces the vehicle exterior side, a second surface 302 that faces the vehicle interior side, and an edge surface that connects the first surface 301 and the second surface 302. Here, a portion of the edge surface located at the upper side refers to an upper edge surface 311, and a portion of the edge surface located at the lower side refers to a lower edge surface 312. The intermediate film 3 is formed into a wedge shape such that the thickness decreases from the upper edge surface 311 toward the lower edge surface 312. Although there is no particular limitation on the wedge angle α3 between the first surface 301 and the second surface 302, the wedge angle α3 can be made smaller than the wedge angle α1 of the outer glass plate 1. Specifically, the wedge angle α3 can be set to, for example, 0.02 to 0.18 mrad, or 0.05 to 0.15 mrad.

The intermediate film 3 is constituted by at least one layer. In an example, the intermediate film 3 can be constituted by three layers, i.e., a soft core layer 31 and outer layers 32 that are harder than the core layer 31 and between which the core layer 31 is sandwiched as shown in the enlarged view of FIG. 2. However, there is no limitation to this configuration, and it is sufficient that the intermediate film 3 may be constituted by a plurality of layers including the core layer 31 and at least one outer layer 32 that is arranged on the outer glass plate 1 side. For example, the intermediate film 3 may be constituted by two layers, i.e., the core layer 31 and one outer layer 32 arranged on the outer glass plate 1 side. Alternatively, the intermediate film 3 may be configured by arranging an even number of outer layers 32 on each side of the core layer 31 so that the core layer 31 is located at the center. Alternatively, the intermediate film 3 may be configured by arranging an odd number of outer layers 32 on one side of the core layer 31 and arranging an even number of outer layers 32 on the other side so that the core layer 31 is sandwiched therebetween. Note that, in the case where only one outer layer 32 is provided, the outer layer 32 is provided on the outer glass plate 1 side as described above, which is for the purpose of enhancing the breakage resistance performance with respect to an external force from the outside of a vehicle or a building. Moreover, when the number of outer layers 32 is increased, the sound insulation performance is improved.

There is no particular limitation on the hardness of the core layer 31 as long as the core layer 31 is softer than the outer layers 32. Although there is no particular limitation on the materials constituting the layers 31 and 32, the outer layers 32 can be made of, for example, a polyvinyl butyral resin (PVB). Polyvinyl butyral resin has good adhesion to the glass plates and good penetration resistance and is thus preferable. On the other hand, the core layer 31 can be made of, for example, an ethylene vinyl acetate resin (EVA) or a polyvinyl acetal resin, which is softer than the polyvinyl butyral resin that constitutes the outer layers. Due to the soft core layer being sandwiched between the outer layers, the sound insulation performance can be significantly improved while maintaining the adhesion and the penetration resistance that are equivalent to those of a single-layered resin intermediate film.

Generally, the hardness of a polyvinyl acetal resin can be controlled by adjusting (a) the degree of polymerization of a polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers 32 and a soft polyvinyl butyral resin that is used for the core layer 31 can be produced using the same polyvinyl butyral resin by appropriately adjusting at least one condition selected from the aforementioned conditions. Furthermore, the hardness of a polyvinyl acetal resin can also be controlled based on the type of aldehyde that is used for acetalization and whether co-acetalization using a plurality of types of aldehydes or pure acetalization using a single type of aldehyde is performed. Although not necessarily applicable to every case, the larger the number of carbon atoms of the aldehyde that is used to obtain a polyvinyl acetal resin is, the softer the resulting polyvinyl acetal resin tends to be. Accordingly, for example, if the outer layers 32 are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 31. Note that there is no limitation to the above-described resins and the like as long as predetermined Young's moduli can be obtained.

The total thickness of the intermediate film 3 is not particularly specified, but is preferably 0.3 to 6.0 mm, more preferably 0.5 to 4.0 mm, and particularly preferably 0.6 to 2.0 mm. The thickness of the core layer 31 is preferably 0.1 to 2.0 mm and more preferably 0.1 to 0.6 mm. On the other hand, the thickness of each outer layer 32 is preferably 0.1 to 2.0 mm and more preferably 0.1 to 1.0 mm. It is also possible to fix the total thickness of the intermediate film 3 and adjust the thickness of the core layer 31 within the fixed total thickness. The thickness above is the thickness of the thickest portion of the intermediate film 3 formed into a wedge shape.

The thicknesses of the core layer 31 and the outer layer 32 can be measured as described below, for example. First, a cross section of the windshield is enlarged by a factor of 175 and displayed using a microscope (e.g., VH-5500 manufactured by Keyence Corporation). Then, the thicknesses of the core layer 31 and the outer layer 32 are visually identified and measured. At this time, in order to eliminate variations seen in visual identification, the measurement is performed five times, and an average value is taken as the thickness of the core layer 31 or the outer layer 32.

The total thickness of the intermediate film 3 is not particularly specified, but is preferably 0.3 to 6.0 mm, more preferably 0.5 to 4.0 mm, and particularly preferably 0.6 to 2.0 mm. The thickness of the core layer 31 is preferably 0.1 to 2.0 mm and more preferably 0.1 to 0.6 mm. On the other hand, the thickness of each outer layer 32 is preferably larger than the thickness of the core layer 31. Specifically, the thickness of each outer layer 32 is preferably 0.1 to 2.0 mm and more preferably 0.1 to 1.0 mm. It is also possible to fix the total thickness of the intermediate film 3 and adjust the thickness of the core layer 31 within the fixed total thickness.

The thicknesses of the core layer 31 and the outer layer 32 can be measured as described below, for example. First, a cross section of the windshield is enlarged by a factor of 175 and displayed using a microscope (e.g., VH-5500 manufactured by Keyence Corporation). Then, the thicknesses of the core layer 31 and the outer layer 32 are visually identified and measured. At this time, in order to eliminate variations seen in visual identification, the measurement is performed five times, and an average value is taken as the thickness of the core layer 31 or the outer layer 32. For example, an enlarged photograph of the windshield is taken, and the core layer and the outer layers 32 are identified in the enlarged photograph to measure the thicknesses thereof.

Although there is no particular limitation on the method for manufacturing the intermediate film 3, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated using a pressing process, a lamination process, or the like. In the method for laminating using the pressing process, the lamination process, or the like, each of the resin films before laminating may have a single-layer structure or a multilayer structure. The intermediate film 3 may be constituted by a single layer rather than the plurality of layers described above.

The intermediate film 3 according to this embodiment is formed by using a roller to draw an intermediate film 3 formed into a rectangular shape in a plan view and thereby increasing the length of the lower side thereof. This processing is referred to as a "drawing processing", and will be described in detail hereinafter. An intermediate film on which the drawing processing has not been performed yet is referred to as a "pre-drawn intermediate film", and an intermediate film on which the drawing processing has been performed is referred to as a "drawn intermediate film".

As shown in FIG. 8, in the drawing processing, a pre-drawn intermediate film is passed through between two conical rollers 91 and 92. Here, the roller on the upper side is referred to as a "first roller 91", and the roller on the lower side is referred to as a "second roller 92". In the rollers 91 and 92, end portions in the axial direction that have a larger diameter are referred to as "first end portions 911 and 921", and end portions in the axial direction that have a smaller diameter are referred to as "second end portions 912 and 922". The first roller 91 and the second roller 92 are arranged such that their rotation axes G1 and G2 extend parallel to each other. The rollers 91 and 92 are arranged such that the first end portions 911 and 921 are located on the same side, and the second end portions 912 and 922 are located on the same side. Thus, a gap 900 in which a distance between the rollers 91 and 92 increases from the portion near the first end portions 911 and 921 toward the portion near the second end portions 912 and 922 is formed between the rollers 91 and 92.

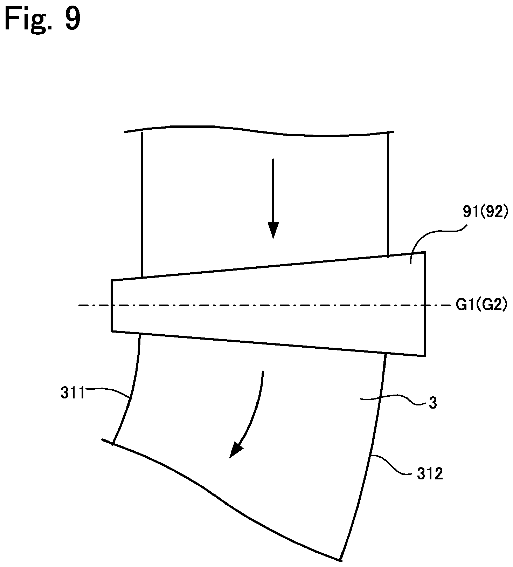

Accordingly, when a pre-drawn intermediate film is passed through between the rollers 91 and 92, a portion of the pre-drawn intermediate film near the first end portions 911 and 921 of the rollers 91 and 92 is drawn as shown in FIG. 9 due to the higher peripheral speed of the first end portions 911 and 921. Thus, a drawn intermediate film 3 having a trapezoidal shape in a plan view is formed. Since the gap 900 is formed between the rollers 91 and 92 as shown in FIG. 8, the thickness of the cross section of the drawn intermediate film 3 decreases from the portion near the first end portions 911 and 921 toward the portion near the second end portions 912 and 922. As a result, the intermediate film 3 whose thickness decreases from the upper edge surface 311 toward the lower edge surface 312 is formed.

### 5. Shield Layer

As shown in FIG. 1, the shield layer 4 that is formed using ceramic of a dark color such as black is layered on a peripheral edge of the windshield. The shield layer 4 blocks the view from the inside or the outside of the vehicle and is layered along four sides of the windshield.

Various configurations can be employed for the shield layer 4. For example, the shield layer 4 can be provided only on an inner surface of the outer glass plate 1 or an inner surface of the inner glass plate 2, or can be provided on both the inner surface of the outer glass plate 1 and the inner surface of the inner glass plate 2. Although the shield layer 4 can be formed using ceramic and various materials, the shield layer can have the following composition, for example.

**Table 1**

| | | First and second colored ceramic paste |
|---|---|---|
| Pigment *1 | mass% | 20 |
| Resin (cellulose resin) | mass% | 10 |
| Organic solvent (pine oil) | mass% | 10 |
| Glass binder *2 | mass% | 65 |
| Viscosity | dPs | 150 |

| | | |
|---|---|---|
| *1 Main components: copper oxide, chromium oxide, iron oxide, and manganese oxide *2: Main components: bismuth borosilicate and zinc borosilicate | | |

Although a ceramic layer can be formed using a screen printing process, the layer can alternatively be produced by transferring a transfer film for firing to the glass plate and firing it. If screen printing is employed, the ceramic layer can be formed under the conditions that a polyester screen of 355 mesh is used, the coating thickness is 20 um, the tension is 20 Nm, the squeegee hardness is 80 degrees, the attachment angle is 75°, and the printing speed is 300 mm/s, and performing drying in a drying furnace at 150°C for 10 minutes, for example.

Ceramic easily adheres to the bottom surface of the above-described glass ribbon 55. This is because the bottom surface has a high concentration of tin oxide. Therefore, if the shield layer 4 is formed using ceramic, the shield layer 4 is preferably formed on the bottom layer. Accordingly, if a windshield such as that shown in FIG. 6 is formed, for example, the shield layer 4 can be formed on the second surface 202 of the inner glass plate 2. Note that the shield layer 4 can also be formed by attaching a shield film made of resin of a black color, as well as by laminating ceramic.

### 6. Method for Manufacturing Windshield

Next, a method for manufacturing the windshield will be described. First, a manufacturing line of the glass plates will be described.

Then, an example of a method for manufacturing the windshield will be described. First, a manufacturing line of the glass plates will be described.

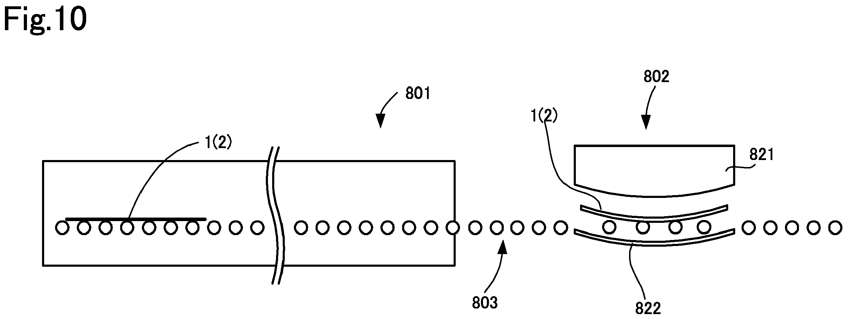

As shown in FIG. 10, the manufacturing line includes a heating furnace 801 and a molding device 802 that are arranged in this order from upstream to downstream. Further, a roller conveyor 903 is arranged so as to run from the heating furnace 801, the molding device 802, and to the downstream side thereof, and the outer glass plate 1 and the inner glass plate 2 that are to be processed are conveyed by the roller conveyor 903. The glass plates 1 and 2 have the shape of a flat plate before being conveyed into the heating furnace 801. For example, the inner glass plate 2 is conveyed into the heating furnace 801 after the above-described shield layer 4 has been layered on the inner surface (the surface on the vehicle interior side) thereof. Note that, as described above, the shield layer 4 can also be layered on a surface other than the inner surface of the inner glass plate 2.

Although the heating furnace 801 may have various configurations, the heating furnace can be an electric heating furnace, for example. The heating furnace 801 includes a furnace main body in the shape of a square tube that is open at the upstream and downstream end portions, and a known roller conveyor 903 is arranged therein so as to run from upstream to downstream. Heaters (not illustrated) are respectively arranged on an upper surface, a lower surface, and a pair of side surfaces of the inner wall of the furnace main body, and heat the glass plates 1 and 2 that pass through the heating furnace 801, to a temperature at which molding can be performed, for example, approximate to the softening point of the glass.

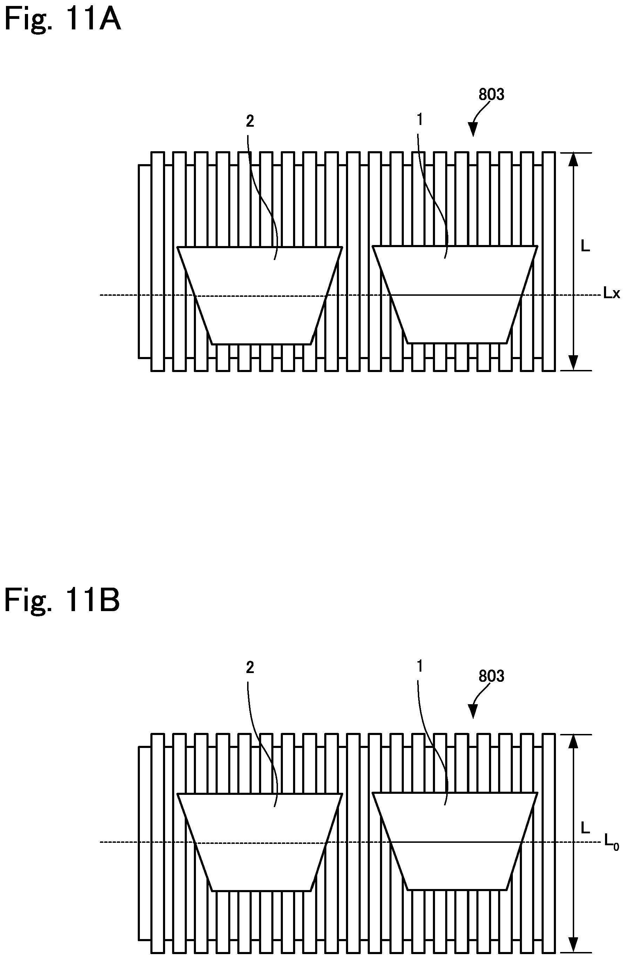

As shown in FIG. 11A, both the outer glass plate 1 and the inner glass plate 2 may be conveyed in the electric furnace 801 such that their center lines in the up-down direction substantially overlap a line Lx that extends dividing a width L of the roller conveyor 801 in a ratio of 2:1. Alternatively, as shown in FIG. 11B, both of the glass plates 1 and 2 may be conveyed such that their center lines in the up-down direction substantially overlap a center line L₀ in the width direction of the roller conveyor. It is thought that, with such a configuration, the lines 150 of the outer glass plate 1 and the lines 250 of the inner glass plate 2 overlap.

The molding device 802 is configured to press the glass plate 1 or 2 between an upper mold 821 and a lower mold 822 to mold the glass plate into a predetermined shape. The upper mold 821 has a curved surface that protrudes downward and covers the entire upper surface (the surface on the vehicle interior side) of the glass plate 1 or 2, and is configured to be movable up and down. The lower mold 822 has the shape of a frame that conforms to the peripheral portion of the glass plate 1 or 2, and includes an upper surface that is curved to conform to the upper mold 821. With this configuration, the glass plate 1 or 2 is press-molded between the upper mold 821 and the lower mold 822 into a final curved shape. The roller conveyor 903 is arranged inside the frame of the lower mold 822, and the roller conveyor 903 is movable up and down and runs through the frame of the lower mold 822. Further, an annealing device (not illustrated) is arranged downstream of the molding device 802 to cool the molded glass plate, though this is not illustrated.

The lower mold 822 of the molding device 802 may come into contact with the entire surface of the glass plate 1 or 2. Configurations of the upper mold and the lower mold are not particularly limited and any other configurations may be employed as long as the molding device 802 can mold the glass plate.

After the outer glass plate 1 and the inner glass plate 2 are molded as described above, subsequently, the intermediate film 3 is sandwiched between the outer glass plate 1 and the inner glass plate 2. The intermediate film 3 is made slightly larger than the outer glass plate 1 and the inner glass plate 2. Therefore, the outer edge of the intermediate film 3 protrudes from the outer glass plate 1 and the inner glass plate 2.

Next, the resultant laminate including the glass plates 1 and 2 and the intermediate film 3 is placed into a rubber bag and preliminarily bonded together at about 70 to 110°C under vacuum suction. Preliminary bonding can be performed using another method, and the following method can also be employed. For example, the above-described laminate is heated at 45 to 65°C in an oven. Next, this laminate is pressed by a roller at 0.45 to 0.55 MPa. Subsequently, this laminate is again heated at 80 to 105°C in an oven and thereafter again pressed by a roller at 0.45 to 0.55 MPa. Thus, preliminary bonding is finished.

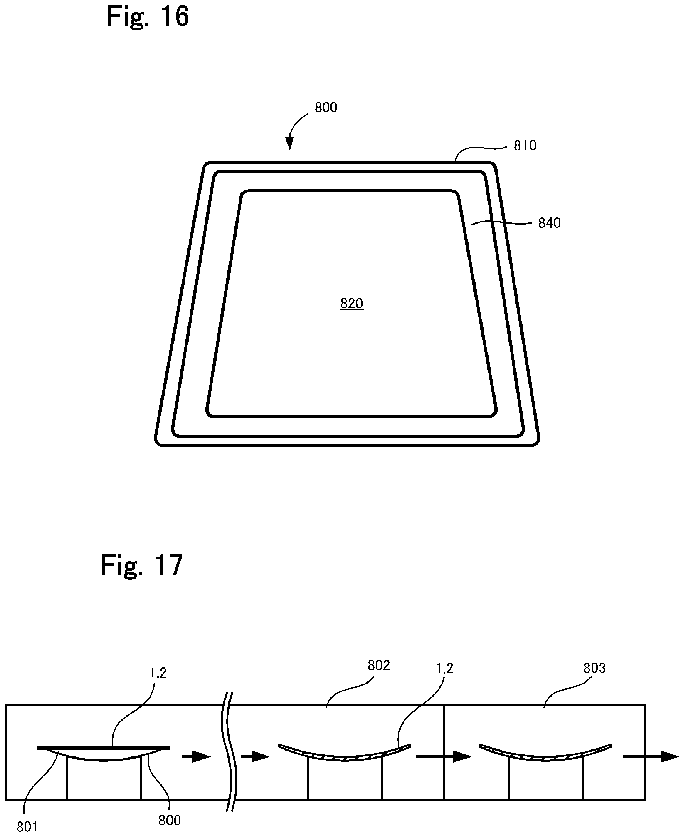

Next, permanent bonding is performed. The preliminarily bonded laminate is permanently bonded using an autoclave at a pressure of 8 to 15 atmospheres and at 100 to 150°C, for example. Specifically, permanent bonding can be performed under the conditions of a pressure of 14 atmospheres and 135°C, for example. Through the above-described preliminary bonding and permanent bonding, the intermediate film 3 is bonded to the glass plates 1 and 2. Finally, a portion of the intermediate film 3 protruding from the outer glass plate 1 and the inner glass plate 2 is cut, and thus a windshield having a cross section as shown in FIG. 2 is manufactured. That is to say, a windshield with a wedge angle αX that is the sum of the wedge angle α1 of the outer glass plate 1 and the wedge angle α3 of the intermediate film 3 is formed. Note that a curved windshield can also be manufactured using other methods such as methods illustrated in FIGS. 16 and 17, which will be described later.

### 7. Head-Up Display Device

Next, the head-up display device will be described. The head-up display device (referred to as an "HUD" device) projects information such as the vehicle speed to the windshield. However, it is known that when the HUD device is used, a double image is formed by light projected to the windshield. That is to say, an image that is seen as a result of reflection from an inner surface of the windshield is seen separately from an image that is seen as a result of reflection from an outer surface of the windshield, and therefore an image is duplicated.

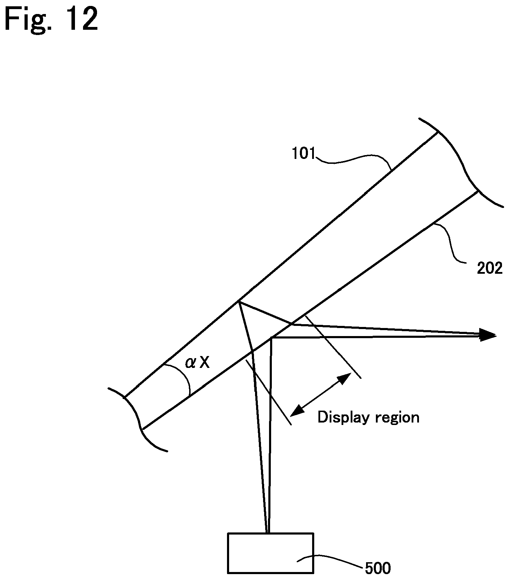

In order to prevent this, a windshield with a wedge angle αX, such as that in this embodiment, is used. That is to say, at least a display region of the windshield to which light is projected by an HUD device 500 is formed such that the thickness decreases downward as shown in FIG. 12. As a result, light that is reflected off the inner surface of the windshield (the second surface 202 of the inner glass plate 2) and then enters the inside of the vehicle and light that is reflected off the outer surface of the windshield (the first surface 101 of the outer glass plate 1) and then enters the inside of the vehicle mostly match and the problem of generation of a double image is resolved.

### 8. Features

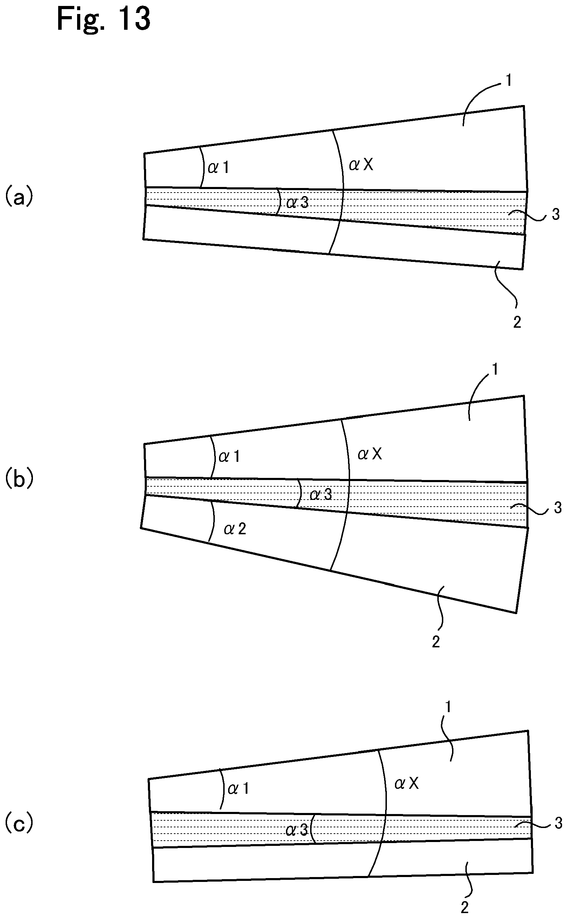

With the windshield according to this embodiment, the following effects can be achieved.
(1) In this embodiment, the glass plates 1 and 2 are arranged such that the lines 150 of the outer glass plate 1 extend parallel to the lines 250 of the inner glass plate 2. The inventors of the present invention found that this configuration reduces perspective distortion. In particular, the inventors of the present invention found that, if, as in the case of this embodiment, the positions of the lines 150 of the outer glass plate 1 and the positions of the lines 250 of the inner glass plate 2 substantially overlap, and the pitch between the lines 150 of the outer glass plate 1 and the pitch between the lines 250 of the inner glass plate 2 are substantially the same, perspective distortion can be further reduced. Accordingly, with the windshield according to this embodiment, it is possible to suppress impairment of visibility despite the use of the wedge-shaped outer glass plate 1.
   Moreover, in this embodiment, outer surfaces of the windshield are constituted by bottom surfaces on which small irregularities are formed with the lines 150 and 250. That is to say, both of the two outer surfaces of the windshield have small irregularities, and therefore, perspective distortion, which occurs when an object on the outside of the vehicle is seen from the inside of the vehicle via the windshield, can be further suppressed.
(2) Since the wedge angles of the outer glass plate 1, the inner glass plate 2, and the intermediate film 3 can be adjusted, windshield with various wedge angles can be formed. As in the case of the example shown in FIG. 2, the outer glass plate 1 and the intermediate film 3 are formed into a wedge shape in the example shown in FIG. 13(a), and thus the wedge angle αX of the windshield can be adjusted by adjusting the wedge angle α1 of the outer glass plate 1 and the wedge angle α3 of the intermediate film 3. In addition, if the inner glass plate 2 is also formed into a wedge shape and has a wedge angle α2 as shown in FIG. 13(b), a windshield with a much larger wedge angle αX can be formed. Note that the wedge angle α1 of the outer glass plate 1 and the wedge angle α2 of the inner glass plate 2 may be the same or different.

Furthermore, if the intermediate film 3 whose thickness decreases toward the upper edge surface 311 is used, a windshield with a wedge angle αX smaller than the wedge angle α1 of the outer glass plate 1 can be formed as shown in FIG. 13(c). That is to say, since the intermediate film 3 with a wedge angle α3 smaller than the wedge angles α1 and α2 of the glass plates 1 and 2 is used in this embodiment, a windshield with a wedge angle αX larger than the wedge angles α1 and α2 of the glass plates 1 and 2 as shown in FIGS. 13(a) and 13(b) or a windshield with a small wedge angle αX as shown in FIGS. 13(c) can be formed. That is to say, windshields with various wedge angles αX that meet demands can be formed. Table 2 below shows examples of wedge-shaped windshields formed by adjusting the wedge angles of the outer glass plate 1, the inner glass plate 2, and the intermediate film 3 (unit: mrad). Note that, in Table 2 below, a horizontal plane is taken as 0 mrad, an inclination in the case where the thickness increases toward the upper side is indicated as a positive angle, and an inclination in the case where the thickness decreases toward the upper side is indicated as a negative angle. For example, an intermediate film of Example 1 with a wedge angle α3 of -0.10 mrad is an intermediate film 3 whose thickness decreases from the lower edge surface 312 toward the upper edge surface 311, and an intermediate film of Example 3 with a wedge angle α3 of 0.05 mrad is an intermediate film 3 as shown in FIG. 8.

**Table 2**

| | Wedge angle α1 of outer glass plate | Wedge angle α2 of inner glass plate | Wedge angle α3 of intermediate film | Wedge angle αX of windshield |
|---|---|---|---|---|
| Ex. 1 | 0.2 | 0 | -0.10 | 0.10 |
| Ex. 2 | 0.2 | 0 | -0.05 | 0.15 |
| Ex. 3 | 0.2 | 0 | 0.05 | 0.25 |
| Ex. 4 | 0.2 | 0.2 | -0.10 | 0.30 |
| Ex. 5 | 0.2 | 0.2 | -0.05 | 0.35 |
| Ex. 6 | 0.2 | 0.2 | 0.05 | 0.45 |
| Ex. 7 | 0.2 | 0.2 | 0.10 | 0.50 |
| Ex. 8 | 0.2 | 0.2 | 0.15 | 0.55 |

The wedge angles shown in Table 2 are merely examples, and the wedge angle αX of a windshield can be set to, for example, 0.1 to 1.2 mrad.

### 9. Variations

Although an embodiment of the present invention has been described, the present invention is not limited to the embodiment above, and various alterations can be made without departing from the gist of the present invention. Also, the following variations can be appropriately combined.

9-1
Although the top surfaces of the outer glass plate 1 and the inner glass plate 2 face each other in the embodiment above, there is no limitation to this configuration. For example, it is also possible to employ an arrangement in which the bottom surfaces face each other. Moreover, a top surface and a bottom surface can also be arranged so as to face each other. In this case, the top surface of the outer glass plate 1 may face the intermediate film 3, or the top surface of the inner glass plate 2 may face the intermediate film 3.

While perspective distortion can be suppressed if bottom surfaces constitute the outer surfaces of the windshield as described above, it is advantageous to layer the shield layer 4 made of ceramic on a bottom surface. Therefore, which surfaces are arranged so as to face each other can be determined depending on the use. Also, the bottom surfaces are suitable for layering an antenna element made of copper or silver through printing or the like, as well as the shield layer 4. Also, the antenna element can be formed on the surface on the vehicle interior side of the inner glass plate.

9-2
Although the lines 150 on the outer glass plate 1 and the lines 250 on the inner glass plate 2 overlap in the embodiment above, all the positions of the lines 150 on the outer glass plate 1 and all the position of the lines 250 on the inner glass plate 2 do not necessarily overlap, and it is sufficient some of them overlap. However, the more the number of the lines 150 and 250 that overlap is, the better it is. For example, it is preferable that 50% or more of the lines overlap. Note that "overlap" as used herein need not mean "fully overlap" and only a small degree of misalignment is allowable. Furthermore, the pitch between the lines 150 on the outer glass plate 1 and the pitch between the lines 250 on the inner glass plate 2 need not be exactly the same, and they may be slightly different.

9-3
Although the intermediate film 3 is formed into a wedge shape in the embodiment above, the intermediate film 3 may be formed into a flat shape in which the first surface 301 and the second surface 302 are parallel to each other.

9-4
There is no particular limitation on the shape of the shield layer 4, and the shield layer 4 can have various shapes. For example, a shield layer that includes a window portion (opening) may also be formed so that light can be emitted from a sensor or the outside can be captured using a camera.

9-5
There is no particular limitation on the method for forming the outer glass plate 1, the inner glass plate 2, and the intermediate film 3 into a wedge shape, and a method other than the above-described method can also be employed.

### Examples

The following describes examples of the present invention. However, the present invention is not limited to the examples below.

Windshields according to the following examples and reference example were prepared. In each of the windshields, the outer glass plate and the intermediate film were formed into a wedge shape, and the inner glass plate was formed into a flat shape. The outer glass plate and the inner glass plate were formed using a float method, and the intermediate film was constituted by a single layer made of PVB. The outer glass plate and the inner glass plate were arranged such that their top surfaces were opposed to each other. The glass plates were formed using the methods described in the embodiment above. The pitch between the lines on the outer glass plate and the pitch between the lines on the inner glass plate were substantially the same, and were 50 mm. In the outer glass plate, the thickest portion had a thickness of 2.3 mm and the thinnest portion had a thickness of 2.0 mm. In the intermediate film, the thickest portion had a thickness of 0.9 mm and the thinnest portion had a thickness of 0.8 mm. The inner glass plate had a thickness of 2.3 mm. In each windshield, the upper side had a length of 1,200 mm, the lower side had a length of 1,400 mm, and the length in the up-down direction was 1,000 mm. In each windshield, the thickest portion had a thickness of 5.5 mm and the thinnest portion had a thickness of 5.1 mm.

### (1) Example 1

The outer glass plate and the inner glass plate were arranged such that the lines thereof extended in the horizontal direction and substantially overlapped.

### (2) Example 2

The outer glass plate and the inner glass plate were arranged such that the lines thereof extended in the horizontal direction and were misaligned in the up-down direction. Specifically, the protrusions of the lines on the outer glass plate and the depressions of the lines on the inner glass plate substantially overlapped.

### (3) Reference Example

The outer glass plate and the inner glass plate were arranged such that the lines on the outer glass plate extended in the horizontal direction, and the lines on the inner glass plate extended in the vertical direction. That is to say, the lines on the outer glass plate were orthogonal to the lines on the inner glass plate.

Next, the thus formed windshields of the examples and reference example were evaluated for perspective distortion. Specifically, the windshield was inclined at an angle of 45 degrees with respect to the vertical direction and was fixed. A horizontal light beam was emitted in the horizontal direction, and light that had passed through the windshield was projected on a screen. The projection image was evaluated based on the following criteria.
- No distortion of the projection image was observed: A
- Substantially no distortion of the projection image was observed: B
- Slight distortion of the projection image was observed: C
- Obvious distortion of the projection image was observed: D

The results were as follows.

| | |
|---|---|
| - Example 1 | B |
| - Example 2 | A |
| - Reference Example | C |

As is clear from the results above, in Examples 1 and 2, perspective distortion equivalent to that in Reference Example having the orthogonal lines could be achieved. Also, the perspective distortion in Example 1 in which the lines overlapped was better than that in Example 2 in which the lines did not overlap.

### B. Second Embodiment

Hereinafter, a second embodiment of the windshield according to the present invention will be described. The following mainly describes differences from the first embodiment, and descriptions of the same configurations are omitted unless otherwise stated.

### 1. Glass Plate

In this embodiment, it is sufficient that at least one of the outer glass plate 1 and the inner glass plate 2 is formed into a wedge shape.

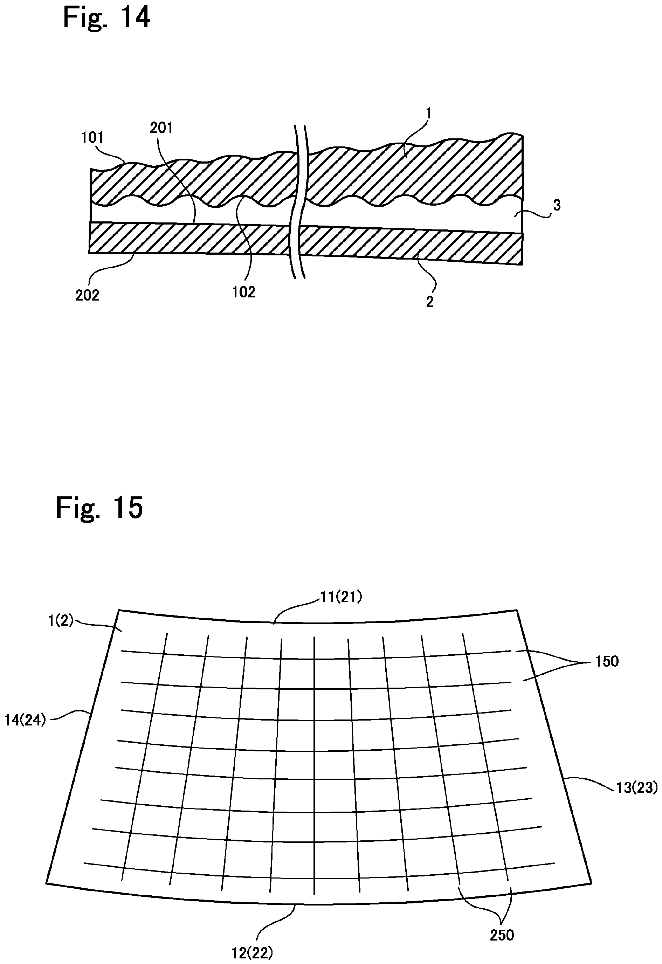

In this embodiment, the lines on the outer glass plate 1 are orthogonal to the lines on the inner glass plate 2 as shown in FIGS. 14 and 15. That is to say, the lines 150 on the outer glass plate 1 formed using the method described in the first embodiment extend parallel to the upper side 11 and the lower side 12. On the other hand, since the inner glass plate 2 has a constant thickness, the direction of the lines can be adjusted. Therefore, the inner glass plate 2 is cut out from the glass ribbon such that the lines 250 extend from the upper side 21 toward the lower side 22. Thus, the windshield is formed such that the lines 150 on the outer glass plate 1 are orthogonal to the lines 250 on the inner glass plate 2. Note that the directions of the lines on the outer glass plate 1 and the inner glass plate 2 may be reversed.

### 2. Intermediate Film

The intermediate film 3 according to this embodiment is formed into a wedge shape. Although there is no particular limitation on the wedge angle α3 between the first surface 301 and the second surface 302 in the wedge shape of the intermediate film 3, the wedge angle α3 is smaller than the wedge angle α1 of the outer glass plate 1. The specific numerical value of the wedge angle α3 is the same as that described in the first embodiment.

### 3. Method for Manufacturing Windshield

Next, a method for manufacturing the windshield will be described. First, a manufacturing line of the glass plates will be described.

Here, a mold will be described in more detail with reference to FIG. 16. FIG. 16 is a plan view of the mold. As shown in FIG. 16, this mold 800 includes a frame-shaped mold main body 810 having a shape that is substantially the same as the external shapes of the glass plates 1 and 2. Since this mold main body 810 is formed in a frame shape, an inner space 820 that is open in the up-down direction is formed inside the mold main body 810. The peripheral portion of the flat glass plate 1 or 2 is placed on the upper surface of the mold main body 810. Accordingly, the glass plate 1 or 2 is heated by a heater (not illustrated) arranged on the lower side through the inner space. Thus, the glass plate 1 or 2 is softened through heating and curves downward under its own weight. Note that a shield board 840 for blocking heat may be arranged at the inner peripheral edge of the mold main body 810, and this makes it possible to adjust heat applied to the glass plate 1 or 2. Heaters can be provided not only below but also above the mold 800.

Next, a molding method will be described with reference to FIG. 17. FIG. 17 is a side view of a furnace through which the mold passes. First, the above-described shield layer 4 is layered on the outer glass plate 1 and the inner glass plate 2 that have not been curved. Next, the outer glass plate 1 and the inner glass plate 2 are stacked one on top of the other, and passes through the heating furnace 802 as shown in FIG. 17 in the state of being supported by the above-described mold 800. When the glass plates 1 and 2 are heated to a temperature near the softening point inside the heating furnace 802, the inner portions with respect to the peripheral edge portions of the glass plates 1 and 2 curve downward under their own weight, and thus the glass plates 1 and 2 are molded into a curved shape. Subsequently, the glass plates 1 and 2 are conveyed from the heating furnace 802 into the annealing furnace 803 and are annealed. Then, the glass plates 1 and 2 are conveyed from the annealing furnace 803 to the outside and are allowed to cool.

After the outer glass plate 1 and the inner glass plate 2 are molded as described above, subsequently, the intermediate film 3 is sandwiched between the outer glass plate 1 and the inner glass plate 2. The intermediate film 3 is made slightly larger than the outer glass plate 1 and the inner glass plate 2. Therefore, the outer edge of the intermediate film 3 protrudes from the outer glass plate 1 and the inner glass plate 2.

The subsequent processes, namely preliminary bonding and permanent bonding, are as described in the first embodiment, and thus descriptions thereof are omitted. Thus, a windshield with a wedge angle αX as shown in FIG. 2 is formed. Note that a curved windshield can also be manufactured using other methods such as pressing.

### 4. Features

With the windshield according to this embodiment, the following effects can be achieved.
(1) An effect similar to that described in (2) of "Features" of the first embodiment can be achieved. Note that the wedge angles shown in Table 2 above are merely examples. It is sufficient that at least one of the outer glass plate 1 and the inner glass plate 2 has a wedge shape. For example, it is also possible to form the outer glass plate 1 into a flat shape and the inner glass plate 2 into a wedge shape. The wedge angle αX of a windshield can be set to, for example, 0.2 to 0.7 mrad.
(2) In the embodiment above, outer surfaces of the windshield are constituted by bottom surfaces on which small irregularities are formed with the lines. That is to say, both of the two outer surfaces of the windshield have small irregularities, and therefore, perspective distortion, which occurs when an object on the outside of the vehicle is seen from the inside of the vehicle via the windshield, can be suppressed.

### 5. Variations

Although the second embodiment of the present invention has been described, the present invention is not limited to the embodiment above, and various alterations can be made without departing from the gist of the present invention. Also, the following variations can be appropriately combined.

5-1
The variations 9-1, 9-4, and 9-5 of the first embodiment can also be applied to variations of this embodiment.

5-2
Although the lines on the outer glass plate 1 are orthogonal to the lines on the inner glass plate 2 in the second embodiment, the lines on the outer glass plate 1 may be parallel to the lines on the inner glass plate 2. In this case, the glass plates can be formed such that the lines extend in the horizontal direction (parallel to the upper sides 11 and 21 and the lower sides 12 and 22).

### C. Third Embodiment

Hereinafter, a third embodiment of the windshield according to the present invention will be described. The following mainly describes differences from the second embodiment, and descriptions of the same configurations are omitted unless otherwise stated.

### 1. Glass Plate

The outer glass plate 1 is formed into a wedge shape. Although there is no particular limitation on the wedge angle α1 between the first surface 101 and the second surface 102 in the wedge shape of the outer glass plate 1, the wedge angle α1 can be set to, for example, 0.1 to 1.1 mrad, or 0.15 to 1.05 mrad. Specifically, the wedge angle α1 can be set to, for example, (0.2+0.4n)±0.05 mrad (where *n* is an integer that is greater than or equal to 0).

When the inner glass plate 2 is formed into a wedge shape with a wedge angle α2, a difference between the wedge angle α2 of the inner glass plate 2 and the wedge angle α1 of the outer glass plate 1 can be set to, for example, 0.35 to 0.45 mrad, or 0.75 to 0.85 mrad.

### 2. Intermediate Film

The intermediate film 3 can be formed into a wedge shape such that the thickness decreases from the upper edge surface 311 toward the lower edge surface 312. Alternatively, the intermediate film 3 can be formed into a flat shape such that the first surface 301 and the second surface 302 are parallel to each other. When the intermediate film 3 is formed into a wedge shape, the specific numerical value of the wedge angle α3 between the first surface 301 and the second surface 302 is as described in the first embodiment. Note that, in this embodiment, at least one of the inner glass plate 2 and the intermediate film 3 is formed into a wedge shape.

### 3. Features

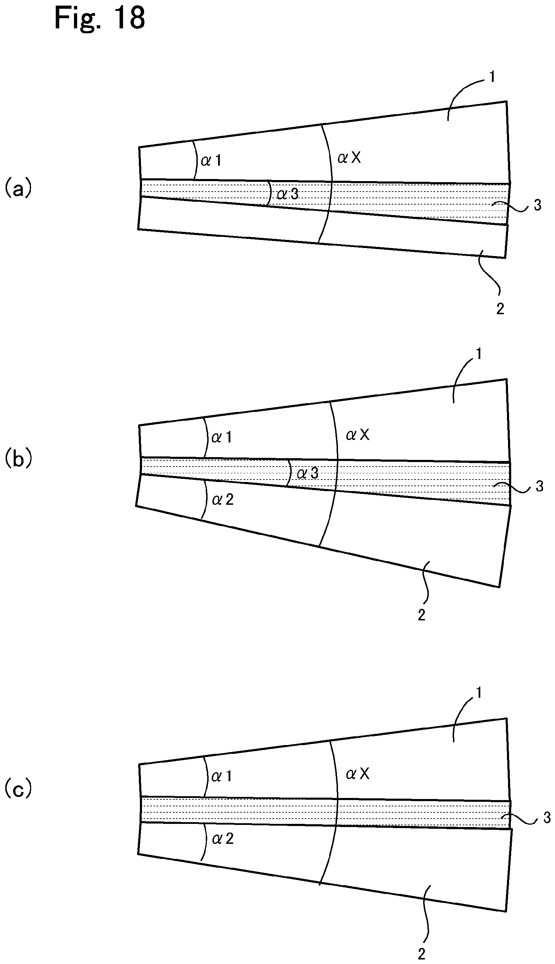

With the windshield according to this embodiment, the following effects can be achieved.
(1) Since the wedge angles of the outer glass plate 1, the inner glass plate 2, and the intermediate film 3 can be adjusted, windshield with various wedge angles can be formed. As in the case of the example shown in FIG. 2, the outer glass plate 1 and the intermediate film 3 are formed into a wedge shape in the example shown in FIG. 18(a), and thus the wedge angle αX of the windshield can be adjusted by adjusting the wedge angle α1 of the outer glass plate 1 and the wedge angle α3 of the intermediate film 3. If the inner glass plate 2 is also formed into a wedge shape as shown in FIG. 18(b), a windshield with a much larger wedge angle αX can be formed. Note that the wedge angle α1 of the outer glass plate 1 and the wedge angle α2 of the inner glass plate 2 may be different.

Furthermore, as shown in FIG. 18(c), it is also possible to form the outer glass plate 1 and the inner glass plate 2 into a wedge shape and the intermediate film 3 into a flat shape. Such combinations of the outer glass plate 1, the inner glass plate 2, and the intermediate film 3 as shown in FIGS. 18(a) to 18(c) can be used to form windshields with various wedge angles αX that meet demands. Table 3 below shows examples of wedge-shaped windshields formed by adjusting the wedge angles of the outer glass plate 1, the inner glass plate 2, and the intermediate film 3 (unit: mrad).

**Table 3**

| | Wedge angle α1 of outer glass plate | Wedge angle α2 of inner glass plate | Wedge angle α3 of intermediate film | Wedge angle αX of windshield |
|---|---|---|---|---|
| Ex. 1 | 0.2 | 0.0 | 0.00 | 0.2 |
| Ex. 2 | 0.2 | 0.0 | 0.10 | 0.3 |
| Ex. 3 | 0.2 | 0.2 | 0.00 | 0.4 |
| Ex. 4 | 0.2 | 0.2 | 0.10 | 0.5 |
| Ex. 5 | 0.6 | 0.0 | 0.00 | 0.6 |
| Ex. 6 | 0.6 | 0.0 | 0.10 | 0.7 |
| Ex. 7 | 0.6 | 0.2 | 0.00 | 0.8 |
| Ex. 8 | 0.6 | 0.2 | 0.10 | 0.9 |
| Ex. 9 | 1.0 | 0.0 | 0.00 | 1.0 |
| Ex. 10 | 1.0 | 0.0 | 0.10 | 1.1 |

Table 3 shows, as examples, windshields with ten types of wedge angles formed using outer glass plate 1 with three types of wedge angles, inner glass plates 2 with two types of wedge angles, and intermediate films 3 with two types of wedge angles. Accordingly, with this embodiment, the glass plates 1 and 2 and the intermediate films 3 with a small number of types of wedge angles can be used to form windshields with a large number of types of wedge angles.

The wedge angles shown in Table 3 are merely examples, and glass plates 1 and 2 and intermediate films 3 with wedge angles different therefrom can be used. The wedge angle αX of a windshield can be set to, for example, 0.1 to 1.2 mrad.

In addition, an effect similar to that described in (2) of "Features" of the second embodiment can be achieved.

### 4. Variations

Although the second embodiment of the present invention has been described, the present invention is not limited to the embodiment above, and various alterations can be made without departing from the gist of the present invention. Also, the following variations can be appropriately combined.

4-1
Although the outer glass plate 1 is formed into a wedge shape and at least one of the inner glass plate 2 and the intermediate film 3 is formed into a wedge shape in the embodiment above, a configuration may also be employed in which, for example, the inner glass plate 2 is formed into a wedge shape and at least one of the outer glass plate 1 and the intermediate film 3 is formed into a wedge shape. In this case, the first glass plate of the present invention corresponds to the inner glass plate 2, and the second glass plate corresponds to the outer glass plate 1.

4-2
The variations 9-1, 9-4, and 9-5 of the first embodiment and the variation 5-2 of the second embodiment can also be applied to variations of this embodiment.

### LIST OF REFERENCE NUMERALS

- 1: Outer glass plate (first glass plate)
- 2: Inner glass plate (second glass plate)
- 3: Intermediate film

## Claims

1. A windshield comprising:
a first glass plate that includes a first surface and a second surface;
a second glass plate that includes a first surface and a second surface and is arranged such that the first surface of the second glass plate faces the second surface of the first glass plate; and
an intermediate film that includes a first surface and a second surface and is sandwiched between the first glass plate and the second glass plate,
wherein
the first glass plate and the second glass plate each include a first end portion and a second end portion that is opposite to the first end portion,
the intermediate film includes a first end portion and a second end portion that is opposite to the first end portion,
the first glass plate has a thickness that decreases from the first end portion toward the second end portion and has a wedge-shaped cross section, and
a plurality of lines are formed on both the first glass plate and the second glass plate, the lines extending in a horizontal direction when the first glass plate and the second glass plate are attached to a vehicle.

2. The windshield according to claim 1,
wherein at least one of positions of the plurality of lines formed on the first glass plate substantially overlaps any of positions of the plurality of lines formed on the second glass plate.

3. The windshield according to claim 1 or 2,
wherein a pitch between the plurality of lines formed on the first glass plate is substantially the same as a pitch between the plurality of lines formed on the second glass plate.

4. The windshield according to any one of claims 1 to 3,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that surfaces containing the tin oxide at a lower concentration face each other.

5. The windshield according to any one of claims 1 to 3,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that a surface containing the tin oxide at a lower concentration and a surface containing the tin oxide at a higher concentration face each other.

6. The windshield according to any one of claims 1 to 5,
wherein the second glass plate has a thickness that decreases from the first end portion toward the second end portion and has a wedge-shaped cross section, and
a wedge angle of the first glass plate and a wedge angle of the second glass plate are substantially the same.

7. The windshield according to any one of claims 1 to 5,
wherein the second glass plate has a thickness that decreases from the first end portion toward the second end portion and has a wedge-shaped cross section, and
a wedge angle of the first glass plate and a wedge angle of the second glass plate differ from each other.

8. The windshield according to any one of claims 1 to 7,
wherein the intermediate film has a thickness that decreases from the first end portion toward the second end portion and has a wedge-shaped cross section.

9. The windshield according to any one of claims 1 to 7,
wherein the intermediate film has a thickness that decreases from the second end portion toward the first end portion and has a wedge-shaped cross section.

10. The windshield according to claim 8 or 9,
wherein a wedge angle of the first glass plate is 0.1 to 0.7 mrad, and
a wedge angle of the intermediate film is 0.02 to 0.18 mrad.

11. The windshield according to claim 8 or 9,
wherein a wedge angle of the first glass plate is 0.15 to 0.45 mrad, and
a wedge angle of the intermediate film is 0.05 to 0.15 mrad.

12. The windshield according to claim 1,
wherein the first surface and the second surface of the first glass plate form a wedge angle α1,
a thickness of the intermediate film decreases from the first end portion toward the second end portion and the first surface and the second surface of the intermediate film form a wedge angle α3, and
the wedge angle α1 is larger than the wedge angle α3.

13. The windshield according to claim 12,
wherein the first surface and the second surface of the second glass plate form a wedge angle α2.

14. The windshield according to claim 12 or 13,
wherein the first end portion of the first glass plate and the second end portion of the intermediate film are arranged on the same side.

15. The windshield according to claim 12 or 13,
wherein the first end portion of the first glass plate and the first end portion of the intermediate film are located on the same side.

16. The windshield according to claim 1,
wherein at least one of the second glass plate and the intermediate film has a thickness that decreases from the first end portion toward the second end portion and has a wedge-shaped cross section.

17. The windshield according to claim 16,
wherein the intermediate film has a wedge-shaped cross section, and
the first end portion of the intermediate film and the first end portion of the first glass plate are located on the same side.

18. The windshield according to claim 16 or 17,
wherein the second glass plate has a wedge-shaped cross section, and
the wedge angle of the first glass plate is larger than the wedge angle of the second glass plate.

19. The windshield according to claim 18,
wherein a difference between the wedge angle of the first glass plate and the wedge angle of the second glass plate is 0.35 to 0.45 mrad.

20. The windshield according to claim 18,
wherein a difference between the wedge angle of the first glass plate and the wedge angle of the second glass plate is 0.75 to 0.85 mrad.

21. The windshield according to any one of claims 16 to 20,
wherein the intermediate film has a wedge-shaped cross section, and
the wedge angle of the first glass plate is (0.2+0.4n)±0.05 mrad (where n is an integer that is greater than or equal to 0), and
a wedge angle of the intermediate film is 0.05 to 0.15 rad.

22. The windshield according to any one of claims 1 to 21,
wherein a thickness decreases from an upper side toward a lower side.

## Amended claims

### Amended claims under Art. 19.1 PCT

1. A windshield comprising:
a first glass plate that includes a first surface and a second surface;
a second glass plate that includes a first surface and a second surface and is arranged such that the first surface of the second glass plate faces the second surface of the first glass plate; and
an intermediate film that includes a first surface and a second surface and is sandwiched between the first glass plate and the second glass plate,
wherein
the first glass plate and the second glass plate each include a first end portion and a second end portion that is opposite to the first end portion,
the intermediate film includes a first end portion and a second end portion that is opposite to the first end portion,
the first glass plate has a thickness that decreases from the first end portion toward the second end portion and has a wedge-shaped cross section, and
a plurality of lines are formed on both the first glass plate and the second glass plate, the lines extending in a horizontal direction when the first glass plate and the second glass plate are attached to a vehicle.

2. The windshield according to claim 1,
wherein at least one of positions of the plurality of lines formed on the first glass plate substantially overlaps any of positions of the plurality of lines formed on the second glass plate.

3. The windshield according to claim 1 or 2,
wherein a pitch between the plurality of lines formed on the first glass plate is substantially the same as a pitch between the plurality of lines formed on the second glass plate.

4. The windshield according to any one of claims 1 to 3,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that surfaces containing the tin oxide at a lower concentration face each other.

5. The windshield according to any one of claims 1 to 3,
wherein the first glass plate and the second glass plate are manufactured using a float method,
in each of the first glass plate and the second glass plate, a concentration of tin oxide contained in the first surface differs from a concentration of tin oxide contained in the second surface, and
the first glass plate and the second glass plate are arranged such that a surface containing the tin oxide at a lower concentration and a surface containing the tin oxide at a higher concentration face each other.

6. The windshield according to any one of claims 1 to 5,
wherein the second glass plate has a thickness that decreases from the first end portion toward the second end portion and has a wedge-shaped cross section, and
a wedge angle of the first glass plate and a wedge angle of the second glass plate are substantially the same.

7. The windshield according to any one of claims 1 to 5,
wherein the second glass plate has a thickness that decreases from the first end portion toward the second end portion and has a wedge-shaped cross section, and
a wedge angle of the first glass plate and a wedge angle of the second glass plate differ from each other.

8. The windshield according to any one of claims 1 to 7,
wherein the intermediate film has a thickness that decreases from the first end portion toward the second end portion and has a wedge-shaped cross section.

9. The windshield according to any one of claims 1 to 7,
wherein the intermediate film has a thickness that decreases from the second end portion toward the first end portion and has a wedge-shaped cross section.

10. The windshield according to claim 8 or 9,
wherein a wedge angle of the first glass plate is 0.1 to 0.7 mrad, and
a wedge angle of the intermediate film is 0.02 to 0.18 mrad.

11. The windshield according to claim 8 or 9,
wherein a wedge angle of the first glass plate is 0.15 to 0.45 mrad, and
a wedge angle of the intermediate film is 0.05 to 0.15 mrad.

12. The windshield according to claim 1,
wherein the first surface and the second surface of the first glass plate form a wedge angle α1,
a thickness of the intermediate film decreases from the first end portion toward the second end portion and the first surface and the second surface of the intermediate film form a wedge angle α3, and
the wedge angle α1 is larger than the wedge angle α3.

13. The windshield according to claim 12,
wherein the first surface and the second surface of the second glass plate form a wedge angle α2.

14. The windshield according to claim 12 or 13,
wherein the first end portion of the first glass plate and the second end portion of the intermediate film are arranged on the same side.

15. The windshield according to claim 12 or 13,
wherein the first end portion of the first glass plate and the first end portion of the intermediate film are located on the same side.

16. The windshield according to claim 1,
wherein at least one of the second glass plate and the intermediate film has a thickness that decreases from the first end portion toward the second end portion and has a wedge-shaped cross section.

17. The windshield according to claim 16,
wherein the intermediate film has a wedge-shaped cross section, and
the first end portion of the intermediate film and the first end portion of the first glass plate are located on the same side.

18. The windshield according to claim 16 or 17,
wherein the second glass plate has a wedge-shaped cross section, and
the wedge angle of the first glass plate is larger than the wedge angle of the second glass plate.

19. The windshield according to claim 18,
wherein a difference between the wedge angle of the first glass plate and the wedge angle of the second glass plate is 0.35 to 0.45 mrad.

20. The windshield according to claim 18,
wherein a difference between the wedge angle of the first glass plate and the wedge angle of the second glass plate is 0.75 to 0.85 mrad.

21. The windshield according to any one of claims 16 to 20,
wherein the intermediate film has a wedge-shaped cross section, and
the wedge angle of the first glass plate is (0.2+0.4n)±0.05 mrad (where n is an integer that is greater than or equal to 0), and
a wedge angle of the intermediate film is 0.05 to 0.15 rad.

22. The windshield according to any one of claims 1 to 21,
wherein a thickness decreases from an upper side toward a lower side.
